Europäisches Patentamt

European Patent Office

Office européen des brevets

(19)

(11) Publication number: **0 237 948 B1**

# EUROPEAN PATENT SPECIFICATION

(12)

(45) Date of publication of patent specification: **10.04.91**   (51) Int. Cl.⁵: **C08L 77/00, C08L 71/12, C08K 5/09**

(21) Application number: **87103535.8**

(22) Date of filing: **11.03.87**

(54) Methods for preparation of polyphenylene ether-polyamide compositions.

(30) Priority: **20.03.86 US 841974**

(43) Date of publication of application:
**23.09.87 Bulletin  87/39**

(45) Publication of the grant of the patent:
**10.04.91 Bulletin  91/15**

(84) Designated Contracting States:
**DE FR GB IT NL**

(56) References cited:
**EP-A- 0 164 767**
**WO-A-85/05372**

(73) Proprietor: **GENERAL ELECTRIC COMPANY**
**1 River Road**
**Schenectady New York 10022(US)**

(72) Inventor: **Chambers, Gregory Robert**
**17 Parkwyn Drive**
**Delmar, NY 12158(US)**

(74) Representative: **Catherine, Alain et al**
**General Electric France Service de Propriété**
**Industrielle 18 Rue Horace Vernet**
**F-92136 Issy-Les-Moulineaux Cedex(FR)**

## Description

For compatibilized polyphenylene ether-polyamide compositions which utilize certain polyfunctional compatibilizing compounds such as aliphatic polycarboxylic acids, it is possible to obtain improved impact strength and ductility by manufacturing an intermediate polyphenylene ether-polyamide compound utilizing a first polyamide component containing at least some nylon 6,6. The intermediate product is further compounded with a second polyamide component containing one or more polyamide resins different from nylon 6,6 or blends of such polyamide resins with nylon 6,6, to provide a compatibilized polyphenylene ether-polyamide composition having superior properties.

Compatibilized polyphenylene ether-polyamide compositions have been provided utilizing a variety of base resins and compatibilizing systems. These thermoplastic products offer a wide range of beneficial properties which take advantage of the strengths of the basic resins while improving upon the weaknesses of each. Among the most useful properties of compatibilized polyphenylene ether-polyamide compositions are excellent heat resistance, chemical resistance, impact strength, hydrolytic stability and dimensional stability. Such compatibilized polyphenylene ether-polyamide compositions have found great utility in exterior automotive applications such as body panels. Examples of compatibilized polyphenylene ether-polyamide compositions can be found in WO-A-8505372 and U-S-A-4,315,086.

The improved properties of polyphenylene ether-polyamide compositions have been achieved by providing a compatible combination of these normally incompatible resins.

A particularly useful series of compatibilized polyphenylene ether-polyamide products are based upon the combination of a polyphenylene ether, a polyamide resin (especially nylon 6,6) and a polyfunctional compatibilizing agent such as the aliphatic polycarboxylic acids (e.g. citric acid). When chemical resistance is important, the polyamide components will comprise at least 35 weight percent of the total composition, based upon the weight of the polyphenylene ether, the polyamide and any rubber impact modifier which may be used. This weight proportion will typically enable the polyamide to form a continuous phase as will the use of compatibilizing amounts of the polyfunctional compatibilizing agent.

It is believed that polyfunctional compatibilizing agents can facilitate formation of a graft copolymer of the polyphenylene ether and polyamide components. Such a reaction has been readily shown to take place under the time, temperature and shear conditions of typical thermoplastic extrusion processes. Graft copolymer produced in this fashion may serve as a melt surfactant which stabilizes the morphology of the resinous components of the system. Compatibility may also be achieved by improved interfacial adhesion of the resinous components.

Although compatibilized PPE/polyamide compositions utilizing nylon 6,6 offer many advantageous properties, compositions containing other polyamides are also sought. Compositions containing a nylon 6 component should benefit from reduced raw material cost as well as improved ductility. Experience has shown, however, that preparation of PPE/polyamide compositions containing nylon 6 and utilizing a polycarboxylic compatibilizing agent such as citric acid has been more difficult that preparation of PPE/polyamide compositions containing nylon 6,6. Generally, more severe compounding conditions are required to achieve acceptable properties.

It has now been discovered that PPE/polyamide compositions compatibilized with an aliphatic polycarboxylic acid compound and which contain a plurality of polyamide components have better impact strength and ductility compared to control compositions containing only one nylon component when manufactured in accordance with the process described below.

Compatibilized polyphenylene ether-polyamide compositions exhibiting the aforementioned improved properties are provided in the following manner.

A first compounding step provides an intermediate PPE/polyamide product. The compounding step is achieved by means typically found in the art of manufacturing thermoplastic resins. Generally, the constituent components are blended together, often in a mechanical blender, to provide a generally uniform mixture of starting materials. This blend of ingredients is then fed to a compounding apparatus which applies sufficient temperature and shear conditions to produce a thermoplastic resin product. The thermoplastic resin product can be a mixture or reaction product of the components. Typically, the compounding apparatus will be an extruder of the single or twin screw type. Melt blending apparatus may also be suitable for the compounding step.

In the instant case, a polyphenylene ether resin is blended with a first polyamide component containing at least some nylon 6,6 resin together with a polyfunctional compatibilizing agent, an optional rubber impact modifier, and typical stabilizers if desired.

This mixture may be fed to the feedthroat of an extruder which begins compounding the ingredients to provide an intermediate PPE/polyamide product.

2

Subsequent to the aforementioned first compounding step, further compounding takes place in a second step. In a preferred embodiment, an extruder is fitted with a second addition port, downstream from the main feedthroat. In an extrusion process, this second step can operate on a continuous basis.

At this downstream addition port, the second polyamide component is added to the intermediate PPE/polyamide composition, and additional compounding takes place. It is evident that the polyamide charged in this second step will probably experience less degradation since it has less exposure to high temperature and shear conditions.

The compatibilized PPE/polyamide final product, which in this instance is the extrudate of the compounding process, can be dried and pelletized by conventional means to provide thermoplastic resin products.

An alternate, less preferred embodiment could accomplish the second compounding step by re-compounding the intermediate product of the first compounding step. For example, the original blend of ingredients (containing the first polyamide component) could be fully extruded to provide the intermediate polyphenylene ether-polyamide product. This intermediate product could be further blended with the second polyamide component which is re-compounded (such as by re-extrusion) to provide the final compatibilized polyphenylene ether-polyamide product.

The compatibilized polyphenylene ether-polyamide compositions produced herein are typically comprised of

A. 10 to 55 parts by weight of a polyphenylene ether resin, preferably poly(2,6-dimethyl-1,4-phenylene ether);

B. 35 to 90 parts by weight of a plurality of polyamide resins comprised of (i) 5 to 75 weight percent nylon 6,6 and (ii) 25 to 95 weight percent of a second polyamide resin selected from the group consisting of nylon 6; nylon 6,9; nylon 10; nylon 11; nylon 12; nylon 4,6 and amorphous nylon. The process of the present invention is a multistep process wherein the polyamide resins are provided in two distinct components. The first polyamide component is utilized in the first compounding step and is always comprised of at least some nylon 6,6. This first polyamide component will typically comprise 10 to 50 weight percent of all the polyamide resins utilized in the compatibilized polyphenylene ether-polyamide compositions. Furthermore, referring solely to this first polyamide component, at least 20 weight percent of this component will be nylon 6,6. The remaining 0 to 80 weight percent of this first polyamide component can be one or more of these polyamides; nylon 6; nylon 6,9; nylon 10; nylon 11; nylon 12; nylon 4,6 and amorprous nylons, etc. Preferably, all or most of the first polyamice component will be comprised of nylon 6,6.

Accordingly, the second polyamide component will constitute approximately 50 to 90 weight percent of the polyamide resins in the total composition. Inasmuch as it is an object of the present invention to avoid using nylon 6,6 as the sole polyamide in the second compounding step, at least one other polyamide such as those enumerated above will be utilized. As will be seen in the examples, blends of these other polyamides with nylon 6,6 are acceptable. Nylon 6 is the preferred polyamide for use in the second compounding step.

C. 0.1 to 2.0 parts of a compatibilizer compound represented by the formula:

$$(R^{I}O) \, R(COOR^{II})_n(CONR^{III}R^{IV})_s$$

wherein R is a linear or branched saturated aliphatic hydrocarbon chain having 2 to 20, preferably 2 to 10, carbon atoms; $R^{I}$ is selected from hydrogen, alkyl having 1 to 10, preferably 1 to 6, most preferably 1 to 4, carbon atoms, or aryl having 6 to 10 carbon atoms, hydrogen being preferred; each $R^{II}$ is independently selected from hydrogen, alkyl having 1 to 20 carbon atoms, preferably 1 to 10 carbon atoms and aryl having 6 to 20, preferably 6 to 10 carbon atoms; each $R^{III}$ and $R^{IV}$ is independently selected from hydrogen, alkyl from 1 to 10, preferably from 1 to 6, most preferably 1 to 4, carbon atoms and aryl having 6 to 10 carbon atoms; n and s are each zero or greater than zero, provided that (n + s) is greater than or equal to 2, and is preferably 2 or 3; and carbonyl groups are separated by 2 to 6 carbon atoms;

Preferred among these are the aliphatic polycarboxylic acids such as citric acid mono-hydrate and anhydrous citric acid. Less than about 0.1 parts compatibilizing agent will not be generally useful, whereas loadings above 2.0 parts offer little additional benefit;

D. optionally, 0 to 25 parts by weight of a rubbery impact modifier such as styrene-butadiene-styrene triblock copolymer, styrene-ethylene/butylene-styrene triblock copolymer, styrene-ethylene/butylene-styrene triblock copolymer, styrene-ethylene/propylene diblock copolymer, or core/shell rubber modifiers such as those having a crosslinked acrylate core and a crosslinked styrene or crosslinked styrene-acrylonitrile shell.

Polyphenylene ethers are a well known class of compounds sometimes referred to as polyphenylene oxides. Examples of suitable polyphenylene ethers and processes for preparation can be found in U.S. Patent Nos. 3,3086,874; 3,306,875; 3,257,357; and 3,257,358 Compositions of the present invention will encompass homopolymers, copolymers and graft copolymers obtained by the oxidative coupling of phenolic compounds. The preferred polyphenylene ethers used as base resins in compositions of the present invention will be comprised of units derived from 2,6-dimethyl phenol. Also contemplated are PPE copolymers comprised of units derived from 2,6-dimethyl phenol and 2,3,6-trimethyl phenol.

A particularly useful polyphenylene ether would be poly(2,6-dimethyl-1,4-phenylene ether) having an intrinsic viscosity (I.V.) greater than, approximately 0.10 dl/g as measured in chloroform at 25° C. The I.V. will typically be between 0.30 and 0.60 dl/g.

The polyamide resins useful in the practice of the present invention are known as nylons, and are characterized by the presence of an amide group (-CONH-). Nylon-6 and nylon-6,6 are the generally preferred polyamides and are available from a variety of commercial sources.

The polyamides can be provided by a number of well known processes. Nylon-6, for example, is a polymerization product of caprolactam. Nylon-6,6 is a condensation product of adipic acid and hexamethylenediamine. A nylon-6,6 having an average molecular weight of approximately 10,000 is especially preferred for use in the first compounding step of the present process. Preferred polyamides will typically have a relative viscosity of at least 35, in accordance with ASTM Test Method D789.

Illustrative polycarboxylic acids suitable as compatibilizer compounds are citric acid, malic acid, and agaricic acid; including the various commercial forms thereof, such as, for example, the anhydrous and hydrated acids. Of these, citric acid is one of the preferred compatibilizing agents. Illustrative of acid esters useful herein include for example, acetyl citrate and mono- and/or di-stearyl citrates and the like. Suitable acid amides useful herein include for example N,N'- diethyl citric acid amide; N,N' dipropyl citric acid amide; N-phenyl citric acid amide; N-dodecyl citric acid amide; N,N'-didodecyl citric acid amide and N-dodecyl malic acid amide. Derivatives of the foregoing polycarboxylic acids are also suitable for use in the practice of the present invention. Especially preferred derivatives are the salts thereof, including the salts with amines and/preferably, the alkali and alkaline metal salts. Exemplary of suitable salts include calcium malate, calcium nitrate, potassium malate and potassium citrate.

Conventional additives such as pigments, thermal and color stabilizers, reinforcing and other fillers, flame retardants, metal synergists and processing aids may all be employed in the practice of the invention.

The following examples describe several non-limiting embodinents of the invention. All parts are by weight unless noted otherwise.

comparative Examples A and B and Examples 1 and 2

Several blends were prepared, each of which contained 49 parts by weight poly(2,6-dimethyl-1,4-phenylene ether) which had an intrinsic viscosity of, approximately, 0.45 dl/g as measured in chloroform at 25° C,' 0.70 part citric acid monohydrate compatibilizing agent, 10 parts rubber modifier (Kraton® D 1102, Shell Chemical, strene-butadiene-styrene triblock copolymer) , 0.30 part Irganox® 1076 hindered phenol stabilizer, 0.10 part KI stabilizer, and 10 parts of a specified nylon.

The foregoing blended components of the composition were fed to the feedthroat of a 30 mm kerner & Pfleiderer twin screw extruder which was fitted with a downstream addition port. The extruder was se at 288° c(550° F.), and was fitted with a downstream addition port.

An additional 31 parts of a nylon component specified in the table were fed at the downstream addition port.

The resulting extruded strand was chopped into pellets, dried and molded into ASTM test parts in a Newbury 3 ounce injection molder having a 288° c(550° F)set temperature profile and a mold set temperature of 65.5° c (150°F). All test results described in Table 1 were performed in accordance with ASTM test specifications.

The polyamide component designated as nylon 6,6 was NP-10,000 from Nylon Polymers. The nylon 6 was Nycoa® 471 from Nylon Corp. of America. Example 1 used a 50:50 blend of both nylons at both the extruder feedthroat as well as the downstream addition port. Improvement can be readily seen in Example 1, and, Example 2 dramatically shown improvement in Notched Izod impact and ductility utilizing the process of the present invention where the nylon 6,6 component is fed at the extruder feedthroat and the nylon 6 component is fed downstream. Mode of failure, in the Dynatup impact test, is indicated by D for ductile failure, Sp for ductile failure with a single split running across but not breaking the plaque, and B refers to brittle failure with many pieces.

The ductile behaviour exhibited by the plastic products of the present invention is an extremely important property for many useful thermoplastic applications, especially in the automotive industry.

Table 1

| | A* | B* | 1 | 2 |
|---|---|---|---|---|
| Blend Nylon (10 parts) | 6,6 | 6 | Blend[a] | 6,6 |
| Downstream Nylon (31 parts) | 6,6 | 6 | Blend[a] | 6 |
| Physical Properties | | | | |
| Izod Impact-Notched (ft.-lbs./in) J/cm | (3.7)1.975 | (2.4)1.281 | (6.4)3.416 | (9.0)4.804 |
| Tensile Elongation (in%) | 73 | 122 | 75 | 74 |
| Dynatup Impact (ft-lbs/in) J/cm | (44.4)23.7 | (45.8)24.4 | (40.8)21.8 | (44.8)23.9 |
| Mode of Failure | D/Sp | Sp/B | D/Sp | Ductile |
| Heat Distortion Temp. at 4.55hPa (66 psi)(°F) °C | (382)194.4 | (357)180.5 | (356)180 | (358)181.1 |

* Comparative Examples

(a) Nylon 6 and Nylon 6,6 in a 50:50 weight ratio

comparative Examples D and E and Examples 3 to 5

A second series of blends were prepared in the same manner as described for Example 1. The rubber component was either styrene-butadiene-styrene (S-B-S) triblock copolymer (Shell Chemical, Kraton®D-1102), or styrene-ethylene/propylene (S-EP) selectively hydrogenated diblock copolymer (Shell Chemical, Kraton® G-I702). In Example 3, a mixture of 10 parts Nylon 6,6 and 31 parts Nylon 6 was prepared prior to extrusion. Ten parts of this mixture was used in the blend at the main feedthroat and 31 parts were added downstream. A different, less severe screw configuration in the 30mm Werner & Pfleiderer extruder was utilized in this series, causing the extrudate to experience a lesser degree of shear.

The same general improvement trends are seen in the series of experiments, especially regarding notched Izod impact strength and ductility. The absolute values of the notched Izod impact are lower, perhaps due to the less severe screw design.

## Table 2

|  | D* | E* | 3 | 4 | 5 |
|---|---|---|---|---|---|
| BLEND NYLON (10 parts) | 6,6 | 6 | BLEND[(a)] | 6,6 | 6,6 |
| DOWNSTREAM NYLON (31 parts) | 6,6 | 6 | BLEND[(a)] | 6 | 6 |
| RUBBER (10 parts) | S-B-S | S-B-S | S-B-S | S-B-S | S-EP |
| Physical Properties |  |  |  |  |  |
| Izod Impact-Notched (ft-lbs/in) J/cm | (3.2) 1.708 | (2.5) 1.334 | (3.6) 1.921 | (3.9) 2.082 | (7.0) 3.736 |
| Dynatup Impact (ft-lbs/in) J/cm | (43.4) 23.2 | (42.5) 22.7 | (50.9) 27.2 | (53.5) 28.5 | (44.2) 23.6 |
| Mode of Failure | Sp | Sp | D | D | D |
| HDT @ 4.55 hPa/ (66 psi) (°F) °C | (382) 194.4 | (364) 184.4 | (360) 182.2 | (360) 182.2 | (366) 185.5 |

* Comparative Examples

(a) Nylon 6 and Nylon 6,6 in a 31:10 weight ratio.

EP 0 237 948 B1

## Claims

1. A method for producing a compatibilized polyphenylene ether-polyamide composition having improved impact strength and ductility comprising the steps of:

(a) compounding in a first step (i) 10 to 55 parts by went of a polyphenylene ether resin, (ii) a first polyamide component comprised of 20 to 100 weight percent nylon 6,6 resin and 0 to 80 weight percent of another polyamide resin, said first polyamie component comprising 10 to 90 height percent of all the polyaride resins utilized in the copatibilized polyphenylene ether-polyamide composition; and (iii) 0.1 to 2.0 parts by weight of a compatibilizer thereby providing an intermediate polyphenylere ether-polyamide composition; said compatibilizer being represented by the formula:

$$(R^IO) R(COOR^{II})_n(CONR^{III}R^{IV})$$

wherein R is a linear or branched saturated aliphatic hydrocarbon chain having 2 to 20, preferably 2 to 10, carbon atoms; $R^I$ is selected from hydrogen, alkyl having 1 to 10, preferably 1 to 6, most preferably 1 to 4, carbon atoms, or aryl having 6 to 10 carbon atoms, hydrogen being preferred; each $R^{II}$ is independently selected from hydrogen, alkyl having 1 to 20 carbon atoms, preferably 1 to 10 carbon atoms and aryl having 6 to 20, preferably 6 to 10 carbon atoms; each $R^{III}$ and $R^{IV}$ is independently selected from hydrogen, alkyl from 1 to 10, preferably from 1 to 6, most preferably 1 to 4, carbon atoms and aryl having 6 to 10 carbon atoms; n and s are each zero or greater than zero, provided that (n + s) is greater than or equal to 2, and is preferably 2 or 3; and carbonyl groups arc separated by 2 to 6 carbon atoms; and

(b) compounding in a second step, into said intermediate polyphenylene ether-polyamide composition, a second polyamide component containing at least one polyamide resin selected from the group consisting of nylon 6; nylon 6,9; nylon 10; nylon 11; nylon 12; nylon 4,6 and amorphous nylon; or a blend of said second polyamide with nylon 6,6, said second polyamide component constituting 50 to 90 weight percent of the polyamide resins of the total composition,and the total polyamide resins representing 35 to 90 parts by weight.

2. A method as in Claim 1 wherein said polyphenylene ether resin is comprised primarily of units selected from 2,6-dimethl phenol and 2,3,6-trimethyl phenol , and has an intrinsic viscosity of, approximately 0.1 to 0.6 dl/g as measured in chloroform at 25°C.

3. A method as in Claim 2 wherein said polyphenylene ether is poly(2,6-dimethyl-1,4-phenylene ether).

4. A method as in Claim 1 wherein said compatibilizer is citric acid.

5. A method as in claim 4 wherein said compatibilizer is 0.2 to 2.0 parts citric acid based on the weight of the compatibilized polphenylene ether-polyamide product.

6. A method as in Claim 1 wherein said polyphenylene ether-polyamide resin is further comprised of up to, approximately 25 parts by weight of a rubbery impact modifier, based upon the weight of the polyphenylene ether and polyamide components taken together.

7. A method as in Claim 6 wherein said rubbery impact modifier is selected from the group consisting of styrene-butadiene-styrene triblock copolymer, styrene-ethylene-butylene-styrene triblock copolymer, styrene-ethylene propylene diblock copolymer, and a core/shell modifier having a crosslinked butylacrylate core and crosslinked styrenic shell.

8. A method as in Claim 1 wherein said first and second polyamide components, taken together, comprise at least 35 percent by weight of the compatibilized polyphenylene ether-polyamide product based upon the total weight of the polyphenylene ether resin, the first and second polyamide components and any optional rubbery impact modifier.

9. A method as in Claim 1 wherein said first step compounding is accomplished at the feed throat and of a thermoplastic extruder.

**10.** A method as in Claim 1 wherein said second compounding step is accomplished by feeding said second polyamide component to said extruder at an addition port downstream from said feedthroat.

**11.** A method as in Claim 1 comprising the further steps of drying and pelletizing the thermoplastic extrudate of the foregoing steps.


**Revendications**

**1.** Procédé de production d'une composition de poly(oxyphénylène)polyamide rendue compatible présentant une meilleure résistance au choc et une meilleure ductilité comprenant les étapes de :

(a) homogénéisation au cours d'une première étape' de (i) 10 à 55 parties en poids d'une résine de poly(oxyphénylene), <ii) un premier composant polyamide composé de 20 a 100 pourcent en poids de résine de nylon 6,6 et de 0 à 80 pourcent en poids d'une autre résine de polyamide, ce premier composant polyamide représentant de 10 à 50 pourcent en poids de toutes les résines de polyamide utilisées dans la composition de poly(oxyphénylène)polyamide rendue compatible et (iii) 0,1 à 2,0 parties en poids d'un agent améliorant la compatibilité pour obtenir ainsi une composition de poly(oxyphénylène)-polyamide intermédiaire l'agent améliorant la compatibilité répondant à la formule

(RIO) R<C0ORII)n(C0NRIIIRIV)s

dans laquelle R représente une chaine hydrocarbonée aliphatique saturée linéaire ou ramifiée ayant de 2 à 20 et, de préférence, de 2 à 10 atomes de carbone $R^1$ est choisi parmi l'hydrogene, un radical alkyle ayant de 1 à 10, de préférence, de 1 à 6 et, mieux encore, de 1 à 4 atomes de carbone ou un radical aryle ayant de 6 à 10 atomes de carbone, l'hydrogène étant II recommandé chacun des groupes R est indépendamment choisi parmi l'hydrogéne, un radical alkyle ayant de 1 à 20 atomes de carbone et, de préférence, de 1 à 10 atomes de carbone et un radical aryle ayant de 6 à 20 et, de préférence, de 6 à 10 atomes de carbone ; chacun des groupes $R^{111}$ et $R^{IV}$ est indépendamment choisi parmi l'hydrogène, un radical alkyle ayant de 1 à 10, de préférence, de 1 à 6 et, mieux encore, de 1 à 4 atomes de carbone et un radical aryle ayant de 6 à 10 atomes de carbone ; n et s sont chacun égaux à zéro ou supérieurs à zéro, à condition que (n + s) soit supérieur ou égal à 2 et,' de préférence, égal à 2 ou à 3 et les groupes carbonyles sont séparés par 2 à 6 atomes de carbone et

(b) homogénéisation au cours d'une seconde étape, avec la composition de poly(oxyphénylène)-polyamide intermédiaire, d'un second composant polyamide contenant au moins une résine de polyamide choisie dans le groupe constitué par le nylon 6 ; le nylon 6,9 ; le nylon 10 ; le nylon 11 ; le nylon 12 ; le nylon 4,6 et le nylon amorphe ou un mélange de ce second polyamide et de nylon 6,6, le second composant polyamide représentant de 50 à 90 pourcent en poids des résines de polyamide de la présente invention et les résines de polyamide totales représentant de 35 à 90 parties en poids.

**2.** Procédé selon la revendication 1, dans lequel la résine de poly(oxyphénylene) se compose principalement de motifs choisis parmi le phénol et le triméthyl-2,3,6 phénol et présente un indice limite de viscosité d'environ 0,1 à 0,6 dl/g, mesuré dans le chloroforme à 25°C.

**3.** procédé selon la revendication 2, dans lequel le poly(oxyphénylène) est le poly(oxy diméthyl-2,6 phénylène-1,4).

**4.** Procédé selon la revendication 1, dans lequel l'agent améliorant la compatibilité est l'acide citrique.

**5.** Procédé selon la revendication 4, dans lequel l'agent améliorant la compatibilité est constitué par de 0,2 à 2,0 parties d'acide citrique, exprimé par rapport au poids du produit de poly(oxyphénylène)-polyamide rendu compatible.

**6.** Procédé selon la revendication 1, dans lequel la résine de poly(oxyphénylène)-polyamide se compose encore de jusqu'à environ 25 parties en poids d'un agent de modification de la résistance au choc caoutchouteux, exprimé par rapport au poids des composants poly(oxyphénylène) et polyamide, pris ensemble.

9

7. Procédé selon la revendication 6, dans lequel l'agent de modification de la résistance au choc caoutchouteux est choisi dans le groupe constitué par un copolymère triséquencé styrène-butadiène-styrène, un copolymère triséquencé styrène-éthylène-butyléne-styrène, un copolymère diséquencé styrène-éthyléne propylène et un agent de modification à enveloppe et noyau ayant un noyau d'acrylate de butyle réticulé et une enveloppe styrénique réticulée.

8. Procédé selon la revendication 1, dans lequel les premier et second composants polyamides, pris ensemble, représentent au moins 35 pourcent en poids du produit de poly(oxyphénylène)-polyamide rendu compatible, exprimé par rapport au poids total de la résine de poly(oxyphénylène), des premier et second composants polyamides et de tout agent de modification de la résistance au choc caoutchouteux employé facultativement.

9. Procédé selon la revendication 1, dans lequel on met en oeuvre l'homogénéisation de la première étape à l'orifice d'alimentation d'une extrudeuse de matière thermoplastique.

10. Procédé selon la revendication 1, dans lequel on met en oeuvre la seconde étape d'homogénéisation en introduisant le second composant polyamide dans l'extrudeuse par un orifice d'addition en aval de l'orifice d'alimentation.

11. Procédé selon la revendication 1, comprenant les étapes supplémentaires de séchage et de transformation en pastilles du produit d'extrusion thermoplastique des étapes précédentes.

## Ansprüche

1. Verfahren zur Erzeugung einer verträglich gemachten Polyphenylenäther-Polyamid Zusammensetzung mit verbesserter Schlagfestigkeit und Duktilität, welches die folgenden Stufen umfaßt:
   a) Zusammenmischen in einer ersten Stufe von
      (i) 10-55 Gew.-Teilen eines Polyphenylenäthearzes,
      (ii) einem ersten Polyamidbestandteil enthaltend 20-100 Gew.-% Nylon-6,6-Harz und 0 bis 80 Gew.- von anderem Polyamid-Harz, wobei dieser erste Polyamidbestandteil 10-50 Gew.-% der gesamten in der verträglich gemachten Polyphenylenäther-Polyamid Zusammensetzung enthaltenen Polyamid-Harze ausmacht und
      (iii) 0,1 bis 2,0 Gew.-Teilen eines Mittels zur Verträglichmachung, wodurch ein Zwischenprodukt aus einer Polyphenylenther-Polyamid Zusammensetzung geschaffen wird, wobei das Mittel zur Verträglichmachung durch die Formel
      $(RIO) R(COORII)n(CONRIIIRIV)s$
      wiedergegeben wird, worin R eine lineare oder verzweigte gesättigte aliphatische Kohlenwasserstoffkette mit 2-20, vorzugsweise 2-10 Kohlenstoffatomen ist, $R^5$ ausgewählt ist aus Wasserstoff, Alkyl mit 1 bis 10, vorzugsweise 1-6 und am meisten bevorzugt 1 bis 4 Kohlenstoffatomen oder Aryl mit 6-10 Kohlenstoffatomen, wobei Wasserstoff bevorzugt ist, jedes $R^{55}$ unabhängig ausgewählt ist aus Wasserstoff, Alkyl mit 1 bis 20 Kohlenstoffatomen, vorzugsweise 1 bis 10 Kohlenstoffatomen und Aryl mit 6-20, vorzugsweise 6-10 Kohlenstoffatomen, jedes $R^{III}$ und $R^{IV}$ unabhängig ausgewählt ist aus Wasserstoff, Alkyl mit 1 bis 10, vorzugsweise 1 bis 6 und am meisten bevorzugt 1 bis 4 Kohlenstoffatomen und Aryl mit 6-10 Kohlenstoffatomen, n und s jeweils Null oder größer als Null sind mit der Maßgabe, daß n und s größer oder gleich 2 ist und vorzugsweise 2 oder 3 ist und Carbonylgruppen durch 2 bis 6 Kohlenstoffatome getrennt sind; und
      (b) in einer zweiten Stufe in dieses Zwischenprodukt aus der Polyphenylenäther-Polyamid-Zusammensetzung ein zweiter Polyamidbestandteil eingemischt wird, der wenigstens ein Polyamid-Harz ausgewählt aus der Gruppe bestehend aus Nylon 6, Nylon 6,9, Nylon 10, Nylon 11, Nylon 12, Nylon 4,6 und amorphem Nylon, oder einer Mischung aus dem zweiten Polyamid mit Nylon 6,6 ausgewählt ist, wobei dieser zweite Polyamidbestandteil 50 bis 90 Gew.-% der Polyamidharze der vorliegenden Erfindung ausmacht und die gesamten Polyamidharze 35 bis 90 Gew.-Teile darstellen.

2. Verfahren nach Anspruch 1, worin das Polyphenylenätherharz hauptsächlich zusammengesetzt ist aus Einheiten, ausgewählt aus dem Phenol und 2,3,6-Trime-thyl Phenol und dasselbe eine grundmolare Viskositätszahl von ungefähr 0,1 bis 0,6 dl/g gemessen in Chloroform bei 25° C aufweist.

3. Verfahren nach Anspruch 2, worin der Polyphenylenäther Poly (2,6-dimethyl-1,4-phenylenäther) ist.

4. Verfahren nach Anspruch 1, worin der die Verträglichkeit bewirkende Bestandteil Zitronensäure ist.

5. Verfahren nach Anspruch 4, worin der die Verträglichkeit bewirkende Bestandteil aus 0,2-2,0 Teilen Zitronensäure bezogen auf das Gewicht des verträglich gemachten Polyphenylenäther-Polyamid Produktes besteht.

6. Verfahren nach Anspruch 1, worin das Polyphenylenäther-Polyamidharz weiterhin bis zu ungefähr 25 Gew.-Teilen eines gummiartigen Schlagmodifizierungsmittels bezogen auf das Gewicht des Polyphenylenäthers und des Polyamidbestandteils zusammengenommen enthält.

7. Verfahren nach Anspruch 6, worin das gummiartige Schlagmodifizierungsmittel ausgewählt ist aus der Gruppe bestehend aus Styrol-Butadien-Styrol-TriblockCopolymer, Styrol-Äthylen-Butylen-Styrol- Triblock-Copolymer, Styrol-Äthylen-Propylen-Diblock-Copolymer und einem Kern/Mantel Modifizierungsmittel mit einem vernetzten Butylacrylat Kern und einem vernetzten Styrol Mantel.

8. Verfahren nach Anspruch 1, worin der erste und der zweite Polyamidbestandteil zusammengenommen wenigstens 35 Gew.-% des verträglich gemachten Polyphenylenäther-Polyamid Produktes, bezogen auf das Gesamtgewicht des Polyphenylätherharzes der ersten und zweiten Polyamid Bestandteile und gegebenenfalls vorhandener gummiartiger Schlagmodifizierungsmittel ausmacht.

9. Verfahren nach Anspruch 1, worin das Zusammenmischen in der ersten Stufe in der Materialeintrittsöffnung eines thermoplastischen Extruders durchgeführt wird.

10. Verfahren nach Anspruch 1, worin die zweite Vermischungsstufe durch Zuführen des zweiten Polyamid Bestandteils in den Extruder an einer stromabwärts von der Materialeintrittsöffnung liegenden Zugabeöffnung erfolgt.

11. Verfahren nach Anspruch 1, welches weitere Stufen zur Trocknung und Granulierung des thermoplastischen Extrudats aus den vorausgehenden Stufen umfaßt.